# FASCICULE DE BREVET EUROPEEN

(11) **EP 1 457 028 B1**
(45) Date de publication et mention de la délivrance du brevet: **14.11.2018**
(21) Numéro de dépôt: 02805380.9
(22) Date de dépôt: 13.12.2002
(51) Int. Cl.: H04M 3/42, H04M 3/436

(54) **PROCEDE ET SYSTEME DE RAPPEL AUTOMATIQUE MULTI RESEAUX**
VERFAHREN UND SYSTEM FÜR AUTOMATISCHEN MEHRFACH-KANAL-ABRUF
METHOD AND SYSTEM FOR MULTIPLE-CHANNEL AUTOMATIC RECALL

(30) Priorité: 21.12.2001 FR 0116752
(43) Date de publication de la demande: 15.09.2004
(73) Titulaire: Orange, 75015 Paris (FR)
(72) Inventeur: BURY, Emmanuel, F-14130 Pont l'Evêque (FR); KERDRAON, Alan, F-14000 Caen (FR); REBILLON, Jacques-Olivier, F-14000 Caen (FR); FLAMMANT, Eric, F-14000 Caen (FR)
(74) Mandataire: Fontenelle, Sandrine
(86) Numéro de dépôt international: PCT/FR2002/004338
(87) Numéro de publication internationale: WO 2003/055186

(56) Documents cités:
- WO-A-98/56194
- US-A- 4 932 050
- US-A- 5 764 747

## Description

La présente invention concerne les services téléphoniques et en particulier un service de rappel automatique d'un correspondant.

Actuellement, certains réseaux commutés offrent un service de rappel automatique, proposant à l'appelant de rappeler automatiquement son correspondant si celui-ci est déjà en conversation téléphonique. Si l'appelant donne son accord en actionnant une touche prédéfinie de son téléphone, le service de rappel automatique rappelle l'appelant dès que son correspondant a raccroché son combiné, puis est mis en communication avec celui-ci.

Un tel service présente l'inconvénient de fonctionner uniquement sur les réseaux commutés accessibles à l'aide d'un téléphone fixe, et n'est proposé que si le correspondant demandé est déjà en communication.

Ce service ne prévoit pas non plus d'offrir aux utilisateurs la possibilité de spécifier des règles de filtrage d'appel, associant des plages horaires à des listes de correspondants autorisés ou non autorisés.

En outre, si un correspondant recherché dispose de plusieurs terminaux de communication (téléphone fixe personnel et au bureau, téléphone mobile), l'appelant est amené à effectuer une tentative d'appel de chacun de ces terminaux l'un après l'autre, jusqu'à ce que le correspondant recherché réponde. Lorsque ces terminaux sont chacun couplés à un service de messagerie vocale ou sont accessibles par l'intermédiaire d'un standard téléphonique, une communication est établie à chaque tentative d'appel, même si le correspondant recherché n'est pas en mesure de répondre. Dès l'instant où le terminal appelé décroche, une communication est facturée à l'appelant. Il en résulte que de nombreux appels sont facturés par les opérateurs de télécommunication, alors qu'ils n'ont pas permis d'établir une communication avec le correspondant recherché.

Le document WO 98/56194 divulgue un exemple d'art antérieur.

La présente invention a pour but de supprimer ces inconvénients. Cet objectif est atteint par la prévision d'un procédé selon la revendication 1, un serveur selon la revendication 7, un système selon la revendication 8 et un programme d'ordinateur selon la revendication 13.

Un mode de réalisation préféré de l'invention sera décrit ci-après, à titre d'exemple non limitatif, avec référence aux dessins annexés dans lesquels
La figure 1 représente sous la forme d'un schéma-bloc un système de rappel automatique selon l'invention ;
La figure 2 montre en détail sous la forme d'un schéma-bloc un serveur de coordination de services utilisé dans le système représenté sur la figure 1 ;
Les figures 3 et 4 représentent sous la forme d'organigrammes les différentes étapes d'un procédé de rappel automatique selon l'invention.

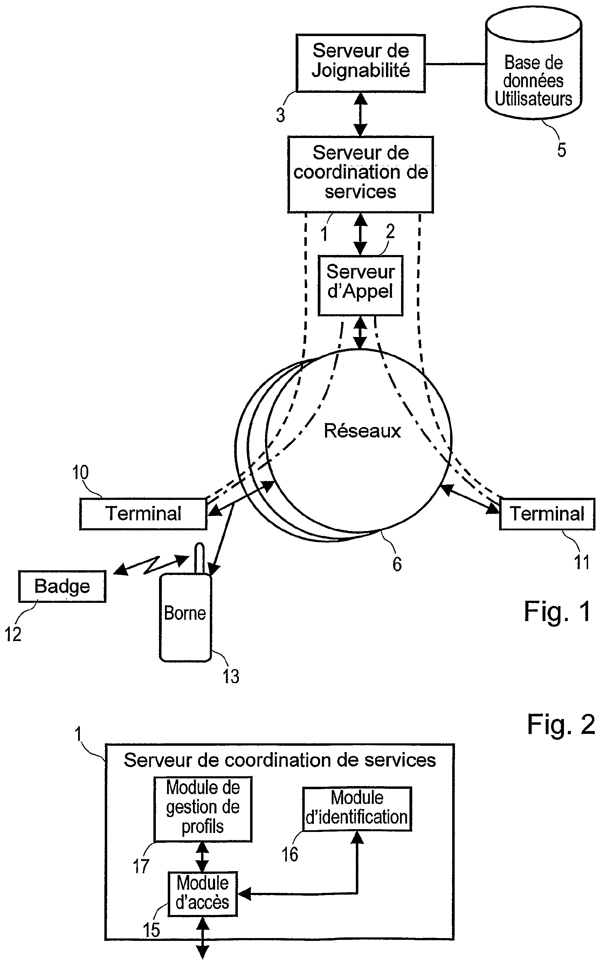

Le système représenté sur la figure 1 comprend un serveur d'appel 2 permettant la mise en communication de plusieurs correspondants équipés chacun d'au moins un terminal 10, 11, via un ou plusieurs réseaux de télécommunication 6, un serveur de joignabilité 3 qui dispose d'un accès à l'ensemble des informations déterminant la joignabilité d'un utilisateur enregistré, et un serveur de coordination de services 1 qui assure notamment la cohérence entre les traitements effectués par le serveur de joignabilité 3 et le serveur d'appel 2.

Les serveurs 1, 2, 3 sont interconnectés par un réseau de transmission de données qui peut être de type privé ou public, par exemple le réseau Internet.

Le serveur d'appel 2 est avantageusement conçu pour diffuser des messages vocaux à un ou plusieurs correspondants. Il peut être constitué d'un point de commande de service (PCS) ou d'un noeud de service dans un réseau dit intelligent, d'un serveur Proxy SIP ou d'un "Gatekeeper VoIP".

Le serveur de joignabilité 3 a accès à une base de données 5 de profils d'utilisateur contenant pour chaque utilisateur enregistré du service de rappel, des répertoires de noms et de numéros d'appel de correspondants de l'utilisateur.
Pour déterminer l'état de joignabilité d'un utilisateur, chaque profil d'utilisateur de la base de données 5 contient également un agenda regroupant les rendez-vous de l'utilisateur. Chaque rendez-vous comprend notamment :
- une date de rendez-vous,
- un horaire de début et de fin du rendez-vous, et
- un état de disponibilité (libre ou joignable, occupé, absent, ...) de l'utilisateur pendant le rendez-vous.

Ces informations de rendez-vous peuvent également comprendre l'objet et le lieu du rendez-vous, le lieu du rendez-vous permettant de déterminer par quel terminal 10, 11 l'utilisateur peut être appelé si celui-ci en a déclaré plusieurs dans son profil. L'agenda d'un utilisateur mémorisé dans la base de données 5 peut également comprendre des informations de filtrage dans lesquelles des plages horaires sont associées à des listes de correspondants définis par un identifiant ou un numéro d'appel, chaque liste de correspondants étant associée à un état de disponibilité (joignable ou non joignable). De cette manière, un utilisateur peut définir que dans une certaine plage horaire, il ne souhaite pas être mis en communication avec un correspondant se trouvant dans une liste de correspondants associée à un état non joignable, ou il ne souhaite être mis en communication qu'avec un correspondant se trouvant une liste de correspondants associée à un état joignable.

Le profil d'un utilisateur dans la base de données 5 peut également comprendre un ou plusieurs répertoires de correspondants de l'utilisateur, chaque répertoire comportant une entrée par correspondant associant un identifiant et un numéro d'appel.

Les répertoires et agendas de chaque utilisateur peuvent également être mis en oeuvre sous la forme de services distincts gérés par des entités distinctes. Dans ce cas, la base de données 5 peut être répartie sur plusieurs serveurs externes distincts.

Pour pouvoir bénéficier du service de rappel automatique, chaque utilisateur doit s'enregistrer et éventuellement s'abonner au service auprès du serveur de coordination de services 1 et définir un profil dans lequel il fournit toutes les informations nécessaires au service de rappel automatique, ces informations comprenant notamment les informations de répertoire et d'agenda, qui sont stockées dans la base de données 5, ainsi que les numéros d'appel ou adresses de tous les terminaux 10, 11 par lesquels l'utilisateur peut être joignable, chaque terminal ainsi spécifié peut éventuellement être associé à un ordre de préférence. Bien entendu, par un moyen approprié (par exemple un ordinateur connecté au réseau Internet), les utilisateurs enregistrés peuvent avoir accès en mise à jour aux informations de profil les concernant, contenues dans la base de données 5, par exemple par l'intermédiaire d'un site accessible par le réseau Internet et dont l'accès nécessite la saisie d'un identifiant et d'un mot de passe. Les utilisateurs du service de rappel ont également la possibilité d'introduire dans leur profil des règles spécifiques, par exemple qu'ils ne sont pas joignables durant un rendez-vous hors du bureau.

A l'enregistrement d'un utilisateur, le serveur de coordination de services 1 attribue à l'utilisateur un numéro d'identification ou de contact lui permettant d'être identifié par le serveur et à l'aide duquel il peut aussi être appelé par ses correspondants. Ce numéro de contact peut être un numéro défini selon la norme E164, le numéro d'appel du téléphone fixe ou mobile de l'utilisateur, une adresse IP (Internet Protocol), ou encore une adresse de messagerie électronique, ou tout autre type d'adresse pouvant caractériser le point de connexion d'un terminal à un réseau.

Le terminal 10, 11 susceptible d'être utilisé pour être appelé par le service de rappel automatique peut être un téléphone mobile ou tout autre terminal disposant d'un accès à un réseau de radiotéléphonie cellulaire, un terminal muni de moyens de traitement de données et connecté à un réseau terrestre tel qu'un terminal IP relié à un réseau public de transmission de données (par exemple un ordinateur connecté au réseau Internet), et également un téléphone fixe relié à un réseau de téléphonique commuté public. Un terminal IP peut être utilisé avec une application de messagerie électronique instantanée ou de téléphonie IP.
A sa connexion ou mise sous tension, le terminal mobile ou IP exécute une procédure de déclaration d'accessibilité, préalablement installée dans le terminal, soit dans la mémoire du terminal, soit dans la carte SIM, soit dans un module mémoire enfichable dans le terminal. Cette procédure consiste à émettre un message à destination du serveur de coordination de services 1 contenant le numéro d'appel ou l'adresse IP du terminal. Cette procédure peut également consister à appeler le serveur 1 qui mémorise à la connexion le numéro d'appel du terminal.
Dans le cas d'un terminal mobile, la transmission d'un tel message est effectuée sous la forme d'un message de données, par exemple de type SMS (Short Message Service) ou USSD (Unstructured Supplemental Service Data) dans le cas d'un réseau GSM, d'un message MMS (Multimedia Messaging Service) dans le cas d'un réseau de type UMTS, ou d'un message transmis par un canal de données selon la norme GPRS (General Packet Radio Service), ou encore d'un message WAP (Wireless Application Protocol).

A l'inverse, lorsque l'utilisateur met hors tension ou déconnecte son terminal, celui-ci exécute au préalable une procédure de déclaration d'accessibilité analogue, au cours de laquelle le terminal est déclaré non accessible au serveur 1. Une telle procédure de déconnexion peut également être déclenchée automatiquement dans le cas d'un terminal mobile, lorsque le niveau de tension des batteries du terminal atteint un seuil bas prédéfini. On peut également prévoir d'exécuter la procédure de déclaration d'accessibilité à chaque passage d'une zone non couverte vers une zone couverte par le réseau correspondant au terminal mobile.

Dans le cas ou le terminal 10, 11 est un téléphone fixe, l'utilisateur du service doit se déclarer accessible, c'est-à-dire déclarer qu'il se trouve en mesure de répondre si le téléphone fixe sonne. Une telle déclaration peut être effectuée manuellement en appelant le serveur de coordination de services 1, en composant un numéro d'appel du serveur 1 prévu à cet effet, ou à l'aide d'une touche du combiné, préprogrammée à cet effet. Cette déclaration peut également être effectuée automatiquement par l'intermédiaire d'une borne 13 reliée au réseau par la même ligne que le téléphone fixe, et disposant de moyens de transmission par radio de courte portée (quelques mètres à quelques dizaines de mètres) par exemple conformes à la norme "Bluetooth". Une telle borne peut également être intégrée dans le téléphone fixe. De son côté, l'utilisateur doit porter des moyens de transmission correspondants, conçus de manière à recevoir un message émis périodiquement par la borne et à transmettre à la borne en réponse un message d'accusé de réception, tant que ces moyens de transmission se trouvent à portée radio de la borne.

Avantageusement, le message d'accusé de réception émis par les moyens de transmission portables contient le numéro de contact ou d'appel de l'utilisateur. De cette manière, un utilisateur peut être appelé sur un téléphone fixe appartenant à un autre utilisateur.
Ces moyens de transmission portables se présentent par exemple sous la forme d'un badge ou d'une carte à puce sans contact. Ils peuvent également être intégrés dans le terminal mobile de l'utilisateur.

A la première réception d'un tel message d'accusé de réception, la borne 13 appelle le serveur 1 pour déclarer la présence de l'utilisateur à proximité de son téléphone fixe. Inversement, lorsque la borne ne reçoit plus de messages d'accusé de réception du badge 12, la borne 13 appelle à nouveau le serveur 1 pour déclarer le départ de l'utilisateur.

Lorsqu'un terminal d'utilisateur est ainsi détecté accessible, c'est-à-dire qu'il permet d'entrer en communication avec l'utilisateur, le serveur de coordination de services 1 crée une session d'accès correspondant au terminal de l'utilisateur, et une session de service.
Si plusieurs terminaux d'un même utilisateur sont déclarés accessibles, on peut appliquer un ordre de priorité, par exemple défini dans le profil de l'utilisateur, ou par défaut si le profil ne spécifie pas d'ordre de priorité.

Sur la figure 2, le serveur de coordination de services 1 comprend un module d'accès 15, un module 16 d'identification et d'authentification, un module 17 de gestion de profils d'abonnés. Le module 15 constitue un point d'accès au serveur de coordination de services 1 et reçoit des demandes de service provenant des utilisateurs, par l'intermédiaire du serveur d'appel 2. A la connexion d'un utilisateur, une demande de service émise au serveur de coordination de services contient des informations concernant l'identité de l'utilisateur comprenant au moins un identifiant, et éventuellement un mot de passe, et des informations concernant le service demandé. Dans le cas présent, ces informations contiennent par exemple le numéro d'appel de l'utilisateur. Le module 16 d'identification et d'authentification est relié au module d'accès et a pour fonction d'identifier et d'authentifier un utilisateur à partir d'une information d'identification et éventuellement un mot de passe ou un numéro de carte SIM (dans le cas de téléphones mobiles). Ce module vérifie l'existence de l'utilisateur et l'authentifie par exemple à l'aide du mot de passe ou du numéro de carte SIM. Le module 16 communique au module d'accès 15 le résultat de l'identification et de l'authentification.
Le module de gestion de profils 17 gère des profils d'utilisateurs stockés dans une ou plusieurs bases de données de profils et notamment la base de données 5. A partir de l'identifiant d'un utilisateur fourni par le module d'accès 15, le gestionnaire de profils 17 interroge la base de données pour obtenir le profil de l'utilisateur correspondant à l'identifiant fourni. Le gestionnaire de profils crée, pour chaque utilisateur, un contexte unique auquel est rattaché :
- une ou plusieurs sessions d'accès, caractérisant la connexion physique de l'utilisateur (PC, téléphone mobile ou fixe, ...) ou l'activation du service de rappel automatique par l'utilisateur, et
- une ou plusieurs sessions de service, rattachée à une session d'accès et caractérisant le déroulement du traitement d'un service.

Lorsqu'un utilisateur équipé d'un terminal 11 cherche à joindre un utilisateur enregistré équipé d'un terminal 10, il doit appeler le serveur d'appel 2 et fournir le numéro de contact de l'utilisateur à appeler. L'accès au serveur d'appel 2 peut par exemple être effectué en composant un numéro de préfixe suivi du numéro de contact du correspondant à appeler ou être effectué automatiquement au niveau du commutateur qui à la suite de la détection du numéro de contact redirige l'appel vers le serveur d'appel.

Dans un mode de réalisation avantageux de l'invention, un utilisateur enregistré peut être appelé par n'importe quel numéro d'appel ou adresse d'un des terminaux de l'utilisateur, mémorisé dans le profil de ce dernier, tous les appels vers ces numéros et adresses étant redirigés automatiquement vers le serveur d'appel 2.

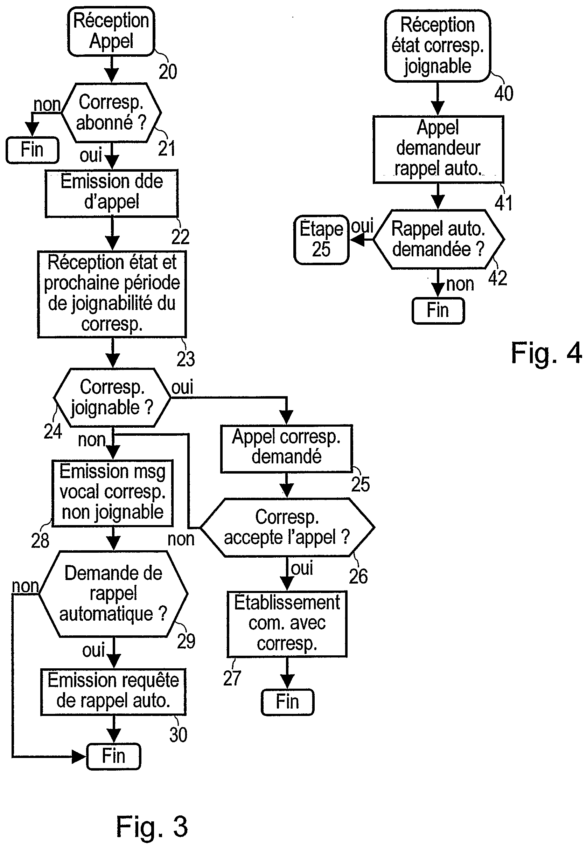

Le serveur d'appel 2 qui reçoit un appel exécute la procédure 20 représentée sur la figure 3. A l'étape 21, le serveur d'appel détermine si le numéro de contact à appeler reçu correspond à un utilisateur enregistré auprès du serveur de coordination de services 1. A cet effet, il émet une requête au serveur 1 qui lui fournit la réponse. Si le correspondant demandé est un utilisateur enregistré, le serveur d'appel 2 transmet 22 une requête au serveur de coordination de services 1, contenant le numéro de contact à appeler et le numéro d'appel de l'utilisateur appelant.

Il est à noter que l'utilisateur appelant n'est pas nécessairement enregistré ou abonné auprès du serveur de coordination de services 1.

Le serveur 1 qui reçoit une telle requête détermine s'il existe une session d'accès correspondant à l'utilisateur recherché (utilisateur accessible) et si le terminal accessible de l'utilisateur recherché est libre ou en communication, en fonction des sessions d'accès et de service actives pour l'utilisateur recherché. Puis il émet une requête au serveur de joignabilité 3 pour obtenir des informations de disponibilité de l'utilisateur demandé pour l'utilisateur appelant.
A la réception d'une telle requête, le serveur de joignabilité 3 accède à l'agenda et aux informations de filtrage du profil de l'utilisateur dans la base de données 5, pour déterminer si l'utilisateur demandé est joignable par l'utilisateur appelant à l'instant présent. Si l'utilisateur demandé n'est pas joignable par l'utilisateur appelant, il détermine la prochaine plage horaire pendant laquelle l'utilisateur appelant est autorisé à appeler l'utilisateur demandé. Ces informations de disponibilité sont ensuite fournies au serveur 1. Le serveur de coordination de services 1 détermine à partir de ces informations de disponibilité et de l'état d'accessibilité de l'utilisateur demandé (au moins un terminal de l'utilisateur demandé accessible ou non), si l'utilisateur demandé est joignable (si au moins un terminal de l'utilisateur est accessible et non occupé, et si l'utilisateur appelant est autorisé à entrer en communication avec l'utilisateur appelé), et transmet ces informations au serveur d'appel 2.

Le serveur d'appel reçoit 23 et analyse ces informations. Si le correspondant demandé est joignable (étape 24), le serveur d'appel appelle 25 le correspondant demandé pour lui demander s'il accepte de recevoir un appel de l'utilisateur appelant (identifié par son numéro d'appel ou par son nom s'il est mentionné en association avec son numéro d'appel dans le répertoire du profil de l'utilisateur mémorisé dans la base de données 5).
Si le correspondant demandé accepte l'appel, par exemple en appuyant sur une touche particulière de son terminal 10, 11 (étape 26), le serveur d'appel 2 met l'utilisateur demandé en communication avec l'utilisateur appelant (étape 27).

Si le correspondant refuse l'appel à l'étape 26, ou n'est pas joignable à l'étape 24, le serveur d'appel diffuse 28 à l'utilisateur appelant un message, par exemple vocal, indiquant que le correspondant recherché n'est pas joignable ou est occupé, et lui proposant un service de rappel automatique. En outre, si le correspondant recherché n'est pas disponible pour l'utilisateur appelant à l'instant présent, le serveur d'appel 2 propose à l'utilisateur appelant de lui indiquer la prochaine plage de disponibilité du correspondant telle qu'elle a été fournie par le serveur de joignabilité 3 via le serveur 1. Le serveur d'appel 2 peut également proposer à l'utilisateur appelant de lui donner accès à une messagerie vocale du correspondant demandé. Si l'utilisateur appelant demande de déposer un message dans la boîte vocale de son correspondant, il est mis en relation par le serveur d'appel avec la boîte vocale du correspondant demandé pour y laisser un message.

Si l'utilisateur appelant demande la prochaine plage horaire pendant laquelle il peut joindre son correspondant, le serveur d'appel 2 diffuse cette information, par exemple sous forme vocale, et lui demande s'il souhaite que le correspondant à appeler soit rappelé automatiquement dès que celui-ci sera disponible (par exemple en appuyant sur une touche particulière de son terminal 11).
Si l'utilisateur appelant accepte 29 le rappel automatique, le serveur d'appel 2 notifie 30 cette demande de service au serveur de coordination de services 1 et met fin à la communication avec le terminal 10, 11 de l'utilisateur appelant. A la suite de cette notification, le serveur 1 crée une session d'accès et de service de rappel automatique pour l'utilisateur à appeler et en informe le serveur de joignabilité 3. Le serveur de joignabilité 3 incrémente alors un compteur de rappel automatique associé à l'utilisateur à appeler, la valeur de ce compteur correspondant au nombre de correspondants cherchant à joindre l'utilisateur à appeler.

La session de service de rappel automatique ainsi créée regroupe les informations suivantes :
- le numéro d'appel de l'utilisateur appelant (numéro E164, adresse IP, adresse email, ...), et
- l'état d'accessibilité du terminal (non accessible / accessible et libre / accessible et occupé) de l'utilisateur appelé,
- l'état de disponibilité de l'utilisateur appelé en fonction de l'identité de l'utilisateur appelant.

Cette dernière information est mise à jour par le serveur de joignabilité à chaque changement d'état de joignabilité de l'utilisateur, déterminé en fonction de l'heure courante et de l'agenda et des informations de filtrage spécifiées dans le profil de l'utilisateur.
Par ailleurs, avant de créer une nouvelle session de rappel automatique, le serveur de coordination de services 1 vérifie qu'une session n'existe pas déjà pour l'utilisateur appelant, et si tel est le cas, il ne crée pas de nouvelle session. Il peut également détruire les sessions de rappel automatique qui ont été activées pendant une durée supérieure à une durée maximale prédéfinie.

Il est à noter qu'à l'étape 25, il peut se produire que l'utilisateur recherché soit enregistré à l'état accessible, mais ne puisse pas être appelé. Un tel cas est détecté à l'expiration d'une temporisation déclenchée à l'émission d'un message de demande d'autorisation d'établissement de communication, à l'étape 25. Ce cas se produit par exemple lorsque le terminal concerné est un terminal mobile qui est sorti de la zone couverte par le réseau mobile correspondant. Le serveur 1 met alors à jour l'état d'accessibilité du terminal de l'utilisateur recherché à l'état "non accessible" et si aucun autre terminal de l'utilisateur n'est à l'état accessible, le serveur d'appel 2 exécute les étapes 28 à 30 décrites ci-avant.

Lorsque la session de rappel automatique de l'utilisateur appelant passe à l'état accessible et disponible (pour l'utilisateur appelant), le serveur de coordination de services 1 notifie une requête d'établissement de connexion au serveur d'appel 2, lequel exécute la procédure 40 représentée sur la figure 4.

Dans cette procédure, le serveur d'appel 2 se met en communication 41 avec l'utilisateur ayant demandé le service de rappel automatique, et demande 42, par exemple sous forme vocale, s'il souhaite toujours être mis en communication avec le correspondant recherché. Si la réponse de l'utilisateur est affirmative, fournie par exemple en appuyant sur une touche particulière du terminal, le serveur d'appel exécute la procédure 20 à partir de l'étape 25, pour éventuellement mettre l'utilisateur appelant en communication avec le correspondant demandé, si ce dernier l'accepte.

Le serveur de coordination de service 1 détruit ensuite la session de rappel automatique correspondante et en informe le serveur de joignabilité 3 qui décrémente le compteur de rappels automatiques correspondant à l'utilisateur appelé.

## Revendications

1. Procédé de rappel automatique d'un utilisateur enregistré, recherché par un utilisateur appelant dans un système de télécommunication comprenant au moins un réseau (6) de télécommunication ou de transmission de données numériques, chaque utilisateur étant équipé d'au moins un terminal de télécommunication (10, 11) susceptible d'être connecté à l'un des réseaux, le procédé comprend les étapes exécutées par un serveur de coordination de services (1), consistant à introduire un profil d'utilisateur pour chaque utilisateur enregistré, comprenant des données de filtrage et d'agenda définissant des plages horaires de disponibilité associées chacune à au moins une liste de correspondants autorisés ou non à appeler l'utilisateur durant la plage horaire, à déterminer et maintenir à jour un état d'accessibilité de chaque terminal (10, 11) d'utilisateur enregistré, selon que l'utilisateur enregistré est accessible ou non par un réseau par l'intermédiaire du terminal, et à la suite d'un appel par un utilisateur appelant d'un utilisateur enregistré :
- à déterminer un état de disponibilité de l'utilisateur appelé selon que l'utilisateur appelant est autorisé à l'instant courant à entrer en communication avec l'utilisateur appelé en fonction des données de profil de l'utilisateur appelé, et d'une information d'identification de l'utilisateur appelant,
- si l'utilisateur appelé n'est pas accessible ou n'autorise pas l'utilisateur appelant à entrer en communication avec lui, à proposer (28) à l'utilisateur appelant d'être mis automatiquement en communication avec l'utilisateur appelé, dès que celui-ci sera accessible et disponible pour l'utilisateur appelant, et si celui-ci accepte, à déclencher une procédure de rappel automatique, et
- durant une procédure de rappel automatique (40) déclenchée dès que l'utilisateur appelé devient accessible et disponible pour l'utilisateur appelant, à rappeler (41) celui-ci et à le mettre en communication (27) avec l'utilisateur appelé.

2. Procédé selon la revendication 1,
**caractérisé en ce que** la procédure de rappel automatique demande (41) à l'utilisateur appelant s'il souhaite toujours être mis en communication avec l'utilisateur appelé, et demande (25) à l'utilisateur appelé s'il accepte d'être mis en communication avec l'utilisateur appelant, et établit (27) la communication entre l'utilisateur appelant et l'utilisateur appelé si ces derniers ont accepté d'être mis en communication.

3. Procédé selon la revendication 1,
**caractérisé en ce que** le profil d'un utilisateur enregistré comprend les numéros d'appel respectifs de plusieurs terminaux (10, 11) par lesquels l'utilisateur peut être appelé, et **en ce que** lorsqu'un utilisateur compose un numéro de contact préalablement attribué à un utilisateur enregistré, il est mis en communication avec un serveur d'appel (2) qui établit ou non une communication avec l'un des terminaux de l'utilisateur enregistré, en fonction de l'état d'accessibilité de ces terminaux et de l'état de disponibilité de l'utilisateur enregistré.

4. Procédé selon la revendication 3,
**caractérisé en ce que** si plusieurs terminaux (10, 11) d'un même utilisateur enregistré sont accessibles à un instant donné, l'utilisateur appelant est mis en communication (27) avec l'utilisateur enregistré à la suite d'une étape de sélection d'un terminal accessible de l'utilisateur enregistré en fonction d'un ordre de priorité, et d'appel du terminal sélectionné.

5. Procédé selon la revendication 1,
**caractérisé en ce que** lorsqu'un utilisateur enregistré passe d'un état dans lequel il se trouve à portée radio d'une borne associée à un terminal (10, 11) identifié dans son profil, et/ou dans lequel le terminal peut recevoir des appels d'un réseau, vers un état dans lequel il ne se trouve plus à portée radio d'une borne associée à un terminal identifié dans son profil, ou dans lequel le terminal n'est plus en mesure de recevoir des appels d'un réseau, et inversement, une procédure de déclaration d'accessibilité du terminal est déclenchée pour mettre à jour l'état d'accessibilité du terminal.

6. Procédé selon la revendication 1,
**caractérisé en ce que** chaque profil d'utilisateur comprend au moins un répertoire dont chaque entrée associe un identifiant d'un correspondant avec un numéro d'appel du correspondant.

7. Serveur de coordination de services (1) pour la mise en oeuvre d'un service de rappel automatique d'un utilisateur enregistré, recherché par un utilisateur appelant dans un système de télécommunication comprenant au moins un réseau (6) de télécommunication ou de transmission de données numériques, chaque utilisateur étant équipé d'au moins un terminal (10, 11) de télécommunication susceptible d'être connecté à l'un des réseaux, comprenant:
- des moyens permettant aux utilisateurs du service de rappel automatique de s'enregistrer et d'introduire un profil d'utilisateur comprenant des données de filtrage et d'agenda définissant des plages horaires de disponibilité associées chacune à au moins une liste de correspondants autorisés ou non à appeler l'utilisateur durant la plage horaire,
- des moyens de mise à jour pour tenir à jour un état d'accessibilité de chaque utilisateur enregistré, selon qu'au moins un terminal (10, 11) de l'utilisateur est ou non accessible par un réseau (6) et est ou non en communication,
- des moyens pour obtenir un état de disponibilité vis-à-vis d'un utilisateur appelant, d'un utilisateur enregistré appelé par ledit utilisateur appelant, selon que ce dernier est autorisé ou non à entrer en communication avec l'utilisateur enregistré, en fonction des informations d'agenda et de filtrage, contenues dans le profil de l'utilisateur enregistré, et
- des moyens pour déclencher une procédure de rappel automatique de l'utilisateur enregistré appelé par l'utilisateur appelant, lorsque l'utilisateur appelé est non accessible ou non disponible vis-à-vis de l'utilisateur appelant, cette procédure de rappel automatique mettant en communication l'utilisateur appelant avec l'utilisateur appelé, dès que celui-ci devient accessible et disponible pour l'utilisateur appelant, en fonction des états d'accessibilité et de disponibilité de l'utilisateur appelé.

8. Système pour le rappel automatique d'un utilisateur enregistré, recherché par un utilisateur appelant dans un système de télécommunication comprenant au moins un réseau (6) de télécommunication ou de transmission de données numériques, chaque utilisateur étant équipé d'au moins un terminal (10, 11) de télécommunication susceptible d'être connecté à l'un des réseaux, comprenant:
- un serveur (1) de coordination de services selon la revendication 7,
- un serveur de joignabilité comprenant des moyens pour tenir à jour un état de disponibilité d'un utilisateur enregistré auprès du serveur de coordination de services (1) vis-à-vis d'un utilisateur appelant, selon que ce dernier est autorisé ou non à entrer en communication avec l'utilisateur enregistré, en fonction des informations d'agenda et de filtrage, contenues dans le profil de l'utilisateur enregistré, et.
- un serveur d'appel (2) vers lequel sont transmis tous les appels destinés à un utilisateur enregistré, l'état de disponibilité de l'utilisateur appelé étant fourni au serveur de coordination de services (1) par le serveur joignabilité (3).

9. Système selon la revendication 8, **caractérisé en ce que** chaque terminal (10, 11) d'utilisateur enregistré est un terminal comprenant des moyens pour se connecter à audit au moins un réseau (6) de télécommunication ou de transmission de données numériques, ledit terminal comprenant en outre des moyens pour, à chaque fois qu'un utilisateur passe d'un état dans lequel ledit utilisateur se trouve en mesure de recevoir des appels par le terminal, vers un état dans lequel ledit utilisateur ne se trouve plus en mesure de recevoir des appels par le terminal, et inversement, émettre un message d'accessibilité vers les moyens de mise à jour du serveur de coordination de services (1).

10. Système selon la revendication 8, **caractérisé en ce que** dans le cas où le terminal (10) de l'utilisateur enregistré est un téléphone fixe, il comprend des moyens (12, 13) pour détecter la présence ou l'absence de l'utilisateur dans une zone de portée radio d'une borne associée au téléphone fixe, et des moyens (13) pour transmettre vers les moyens du serveur de coordination de services (1) de mise à jour de l'état d'accessibilité de l'utilisateur, un message d'accessibilité du téléphone fixe à chaque changement d'état de présence de l'utilisateur dans ladite zone.

11. Système selon la revendication 8,
**caractérisé en ce que** dans le cas où le terminal (11) de l'utilisateur est un téléphone mobile, il comprend un programme qui est chargé dans une mémoire accessible au téléphone mobile et qui est exécuté à la mise sous tension du téléphone mobile si celui-ci se trouve dans une zone couverte par un réseau (6) de téléphonie cellulaire correspondant, ou à la mise hors tension du téléphone mobile, pour déclencher l'émission vers les moyens du serveur de coordination de services (1) de mise à jour de l'état d'accessibilité de l'utilisateur, d'un message d'accessibilité du téléphone mobile pour déclarer celui-ci respectivement accessible, ou non accessible.

12. Système selon la revendication 8,
**caractérisé en ce que** dans le cas où le terminal (11) de l'utilisateur est un terminal muni de moyens de traitement de données et connecté à un réseau terrestre (6), il comprend un programme qui est chargé dans la mémoire du terminal et qui est exécuté à la mise sous tension du terminal, ou à la mise hors tension du terminal, pour déclencher l'émission vers les moyens du serveur de coordination de services (1) de mise à jour de l'état d'accessibilité de l'utilisateur, d'un message d'accessibilité du terminal pour déclarer celui-ci respectivement accessible, ou non accessible.

13. Programme d'ordinateur destiné à être exécuté par un serveur connecté à au moins un réseau (6) de télécommunication ou de transmission de données numériques, pour la mise en oeuvre d'un service de rappel automatique d'un utilisateur appelé, recherché par un utilisateur appelant, chaque utilisateur étant équipé d'au moins un terminal de télécommunication (10, 11) susceptible d'être connecté à l'un des réseaux,
**caractérisé en ce qu'**il est conçu pour mettre en oeuvre le procédé selon l'une des revendications 1 à 6.

## Patentansprüche

1. Automatisches Rückrufverfahren eines registrierten Nutzers, aufgesucht durch einen Nutzer, der sich in ein Telekommunikationsnetz einwählt, das mindestens ein Telekommunikationsnetz oder Übertragungsnetz von digitalen Daten (6) aufweist, wobei jeder Nutzer mit mindestens einem Telekommunikationsendgerät (10, 11) ausgerüstet ist, das an eines der Netze angeschlossen werden kann,
wobei das Verfahren die Etappen aufweist, die von einem Dienstkoordinierungsserver (1) ausgeführt werden und hrt die darin bestehen, ein Nutzerprofil für jeden registrierten Nutzer einzugeben, das Filter- und Terminkalenderdaten umfasst, die Zeitspannen für die Verfügbarkeit definieren, die ein jede mit mindestens einer Liste von Kontakten verknüpft sind, die ermächtigt oder nicht ermächtigt sind, den Nutzer während der Zeitspanne anzurufen, den Zugänglichkeitsstatus eines registrierten Nutzers zu einem jeden Endgerät (10, 11) zu bestimmen und aktuell zu halten, nach der jeder registrierte Nutzer durch ein Netz über das Endgerät zugänglich ist, und nach einem Anruf durch einen Nutzer, der einen registrierten Nutzer anruft:
- einen Verfügbarkeitsstatus des angerufenen Nutzers zu bestimmen, nach dem der anrufende Nutzer zu diesem Zeitpunkt sofort ermächtigt wird, mit dem angerufenen Nutzer entsprechend den Profildaten des angerufenen Nutzers und einer Identifizierungsinformation des anrufenden Nutzers verbunden zu werden,
- falls der angerufene Nutzer nicht zugänglich ist oder den anrufenden Nutzer nicht ermächtigt, mit ihm verbunden zu werden, dem anrufenden Nutzer vorzuschlagen (28), automatisch mit dem angerufenen Nutzer verbunden zu werden, sobald dieser für den anrufenden Nutzer zugänglich und verfügbar ist, und sofern dieser akzeptiert, ein automatisches Rückrufverfahren auszulösen, und
- während eines automatischen Rückrufverfahrens (40), das ausgelöst wird, sobald der angerufene Nutzer für den anrufenden Nutzer zugänglich und verfügbar wird, diesen zurückzurufen (41) und ihn mit dem angerufenen Nutzer zu verbinden (27).

2. Verfahren nach Anspruch 1,
**dadurch gekennzeichnet, dass** das automatische Rückrufverfahren (41) den anrufenden Nutzer fragt, ob er noch immer mit dem angerufenen Nutzer verbunden werden möchte, und den angerufenen Nutzer fragt (25), ob er akzeptiert, mit dem anrufenden Nutzer verbunden zu werden, und die Verbindung zwischen den anrufenden Nutzer und den angerufenen Nutzer herstellt (27), sofern Letztere akzeptiert haben, verbunden zu werden.

3. Verfahren nach Anspruch 1,
**dadurch gekennzeichnet, dass** das Profil eines registrierten Nutzers die jeweiligen Anrufnummern von mehreren Endgeräten (10, 11) aufweist, über die der Nutzer angerufen werden kann, und dass, wenn ein Nutzer eine Nummer eines Kontakts wählt, die zuvor einem registrierten Nutzer zugewiesen wurde, er mit einem Anrufserver (2) verbunden wird, der eine Verbindung mit einem der Endgeräte des registrierten Nutzers herstellt oder nicht, und zwar je nach Status der Zugänglichkeit dieser Endgeräte und des Verfügbarkeitsstatus des registrierten Nutzers.

4. Verfahren nach Anspruch 3,
**dadurch gekennzeichnet, dass** wenn mehrere Endgeräte (10, 11) desselben registrierten Nutzers zu einem gegebenen Zeitpunkt zugänglich sind, der anrufende Nutzer nach einer Etappe der Auswahl eines zugänglichen Endgeräts des registrierten Nutzers entsprechend einer Prioritäten- und Anrufrangfolge des gewählten Endgeräts mit dem registrierten Nutzer verbunden wird (27).

5. Verfahren nach Anspruch 1,
**dadurch gekennzeichnet, dass** wenn ein registrierter Nutzer von einem Status, in dem sich im Funkbereich eine Klemme befindet, die mit einem Endgerät (10, 11) verbunden ist, das in seinem Profil identifiziert ist und/oder in dem das Endgerät Anrufe eines Netzes empfangen kann, zu einem Status übergeht, in dem er sich nicht mehr im Funkbereich einer Klemme befindet, die nicht mit einem Endgerät verbunden ist, das in seinem Profil identifiziert ist, oder in dem das Endgerät nicht mehr imstande ist, Anrufe eines Netzes zu empfangen, und umgekehrt, wird ein Verfahren zur Erklärung der Zugänglichkeit des Endgeräts ausgelöst, um den Zugänglichkeitsstatus des Endgeräts zu aktualisieren.

6. Verfahren nach Anspruch 1,
**dadurch gekennzeichnet, dass** jedes Nutzerprofil mindestens ein Verzeichnis aufweist, bei dem jede Eingabe eine Kennung eines Gesprächspartners mit einer Rufnummer des Gesprächspartners verbindet.

7. Dienstkoordinierungsserver (1) für die Umsetzung eines automatischen Rückrufdienstes eines registrierten Nutzers, aufgesucht durch einen anrufenden Nutzer im Telekommunikationssystem, das mindestens ein Telekommunikationsnetz oder Übertragungsnetz von digitalen Daten (6) aufweist, wobei jeder Nutzer mit mindestens einem Telekommunikationsendgerät (10, 11) ausgerüstet ist, das mit einem der Netze verbunden werden kann,
wobei er Folgendes aufweist:
- Hilfsmittel, die den Nutzern des automatischen Rückrufdienstes ermöglichen, sich zu registrieren und ein Nutzerprofil einzugeben, das Filter- und Terminkalenderdaten aufweist, die Zeitspannen für die Verfügbarkeit definieren, die ein jede mit mindestens einer Liste von Kontakten verknüpft sind, die ermächtigt oder nicht ermächtigt sind, den Nutzer während der Zeitspanne anzurufen,
- Aktualisierungshilfsmittel, um einen Zugänglichkeitsstatus eines jeden registrierten Nutzers aktuell zu halten, nach dem mindestens ein Endgerät (10, 11) des Nutzers durch ein Netz (6) zugänglich ist oder nicht und verbunden ist oder nicht,
- Hilfsmittel, um einen Verfügbarkeitsstatus, für einen anrufenden Nutzer, eines registrierten Nutzers, der von dem anrufenden Nutzer angerufen wird, zu erhalten, nach dem Letzterer ermächtigt oder nicht ermächtigt wird, mit dem erfassten Nutzer verbunden zu werden, und zwar entsprechend den Terminkalender- und Filterinformationen, die im Profil des registrierten Nutzers enthalten sind, und
- Hilfsmittel, um ein automatisches Rückrufverfahren des registrierten Nutzers auszulösen, der von dem anrufenden Nutzer angerufen wird, wenn der angerufene Nutzer nicht zugänglich oder nicht verfügbar für den anrufenden Nutzer ist, wobei dieses automatische Rückrufverfahren eine Verbindung herstellt zwischen dem anrufenden Nutzer und dem angerufenen Nutzer, sobald dieser, entsprechend dem Zugänglichkeits- und Verfügbarkeitsstatus des angerufenen Nutzers zugänglich und verfügbar für den anrufenden Nutzer wird.

8. Automatisches Rückrufverfahren eines registrierten Nutzers, aufgesucht durch einen Nutzer, der sich in ein Telekommunikationsnetz einwählt, das mindestens ein Telekommunikationsnetz oder Übertragungsnetz von digitalen Daten (6) aufweist, wobei jeder Nutzer mit mindestens einem Telekommunikationsendgerät (10, 11) ausgerüstet ist, das an eines der Netze angeschlossen werden kann,
wobei es Folgendes aufweist:
- einen Dienstkoordinierungsserver (1) nach Anspruch 7,
- einen Erreichbarkeitsserver, der Hilfsmittel aufweist, um einen Verfügbarkeitsstatus eines registrierten Nutzers bei dem Dienstkoordinierungsserver (1) für einen anrufenden Nutzer auf dem aktuellen Stand zu halten, je nachdem, ob Letzterer ermächtigt ist, entsprechend den Terminkalender- und Filterinformationen, die im Profil des registrierten Nutzers enthalten sind, mit dem registrierten Nutzer verbunden zu werden oder nicht, und
- einen Anrufserver (2), zu dem alle Anrufe übertragen werden, die an einen registrierten Nutzer gehen,
wobei der Verfügbarkeitsstatus des angerufenen Nutzers durch den Erreichbarkeitsserver (3) dem Dienstkoordinierungsserver (1) vorgesehen wird.

9. System nach Anspruch 8,
**dadurch gekennzeichnet, dass** jedes Endgerät (10, 11) des registrierten Benutzers, ein Endgerät ist, das Hilfsmittel aufweist, um sich mit dem mindestens einen Telekommunikationsnetz oder Übertragungsnetz von digitalen Daten (6) zu verbinden, wobei das Endgerät weiterhin Hilfsmittel aufweist, um und zwar jedes Mal, wenn ein Nutzer von einem Status, bei dem der genannte Nutzer sich imstande befindet, die Anrufe durch das Endgerät zu empfangen, zu einem Status übergeht, bei dem sich der genannte Nutzer nicht mehr imstande befindet, die Anrufe durch das Endgerät zu empfangen, und umgekehrt, eine Zugänglichkeitsmitteilung zu den Aktualisierungshilfsmitteln des Dienstkoordinierungsserver (1) auszugeben.

10. System nach Anspruch 8,
**dadurch gekennzeichnet, dass** falls das Endgerät (10) des registrierten Nutzers ein Festnetztelefon ist, es Hilfsmittel (12, 13), um die Anwesenheit oder Abwesenheit des Nutzers in einem Funkbereich einer Klemme zu detektieren, die mit dem Festnetztelefon verbunden ist, sowie Hilfsmittel (13) aufweist, um zu den Hilfsmitteln des Dienstkoordinierungsservers (1) für die Aktualisierung des Zugänglichkeitsstatus des Nutzers eine Zugänglichkeitsmitteilung vom Festnetztelefon bei jeder Änderung des Anwesenheitsstatus des Nutzers im genannten Bereich zu übermitteln.

11. System nach Anspruch 8,
**dadurch gekennzeichnet, dass** falls das Endgerät (11) des Nutzers ein Mobiltelefon ist, es ein Programm aufweist, das in einem Speicher geladen wird, der für das Mobiltelefon zugänglich ist und das bei der Spannungszuschaltung des Mobiltelefons, wenn sich dieses in einem Bereich befindet, das von einem entsprechenden Mobiltelefonienetz (6) abgedeckt wird, oder bei Spannungsabschaltung des Mobiltelefons ausgeführt wird, um eine Ausgabe zu den Hilfsmitteln des Dienstkoordinierungsservers (1) für die Aktualisierung des Zugänglichkeitsstatus des Nutzers eine Zugänglichkeitsmitteilung des Mobiltelefons auszulösen, um diesen jeweils für zugänglich oder nicht zugänglich zu erklären.

12. System nach Anspruch 8,
**gekennzeichnet dadurch, dass** falls das Endgerät (11) des Nutzers mit Hilfsmitteln für die Datenverarbeitung ausgerüstet und an ein Landtelefonienetz (6) angeschlossen ist, es ein Programm aufweist, das in den Speicher des Endgeräts geladen wird und das bei der Spannungszuschaltung des Endgeräts oder bei der Spannungsabschaltung des Endgeräts ausgeführt wird, um die Ausgabe zu den Hilfsmitteln des Dienstkoordinierungsservers (1) für die Aktualisierung des Zugänglichkeitsstatus des Nutzers einer Zugänglichkeitsmitteilung des Endgeräts auszulösen, um diesen jeweils für zugänglich oder nicht zugänglich zu erklären.

13. Computerprogramm, das dazu bestimmt ist, von einem Server ausgeführt zu werden, das mit mindestens einem Telekommunikationsnetz oder Übertragungsnetz von digitalen Daten (6) verbunden ist, für die Umsetzung eines automatischen Rückrufdienstes eines angerufenen Nutzers, der von einem anrufenden Nutzer aufgesucht wird, wobei jeder Nutzer mit mindestens einem Telekommunikationsendgerät (10, 11) ausgerüstet ist, das an eins der Netze angeschlossen werden kann,
**dadurch gekennzeichnet, dass** es konzipiert ist, um das Verfahren nach einem der Ansprüche 1 bis 6 umzusetzen.

## Claims

1. Method for automatically calling back a registered user, sought by a calling user in a telecommunications system comprising at least one telecommunications or digital data transmission network (6), each user being equipped with at least one telecommunications terminal (10, 11) able to be connected to one of the networks, the method comprises steps, executed by a services coordination server (1), of submitting a user profile for each registered user, comprising filter and schedule data defining availability time slots each associated with at least one list of correspondents that are or are not authorized to call the user during the time slot, of determining and keeping up to date a state of accessibility of each terminal (10, 11) of a registered user, according to whether the registered user is or is not accessible via a network by way of the terminal, and, following a call by a user calling a registered user:
- of determining a state of availability of the called user according to whether the calling user is authorized at the present time to enter into communication with the called user on the basis of the profile data of the called user, and of identification information of the calling user,
- if the called user is not accessible or does not authorize the calling user to enter into communication with him, of inviting (28) the calling user to be put into communication automatically with the called user as soon as said called user is accessible and available to the calling user, and if said calling user accepts, of triggering an automatic callback procedure, and
- during an automatic callback procedure (40) triggered as soon as the called user becomes accessible and available to the calling user, of calling back (41) said calling user and of putting him into communication (27) with the called user.

2. Method according to Claim 1,
**characterized in that** the automatic callback procedure asks (41) the calling user whether he still wishes to be put into communication with the called user, and asks (25) the called user if he accepts being put into communication with the calling user, and establishes (27) communication between the calling user and the called user if they have accepted being put into communication.

3. Method according to Claim 1,
**characterized in that** the profile of a registered user comprises the respective telephone numbers of a plurality of terminals (10, 11) via which the user is able to be called, and **in that**, when a user dials a contact number assigned beforehand to a registered user, he is put into communication with a call server (2) that establishes or does not establish communication with one of the terminals of the registered user on the basis of the state of accessibility of these terminals and of the state of availability of the registered user.

4. Method according to Claim 3,
**characterized in that**, if a plurality of terminals (10, 11) of one and the same registered user are accessible at a given instant, the calling user is put into communication (27) with the registered user following a step of selecting an accessible terminal of the registered user on the basis of an order of priority, and of calling the selected terminal.

5. Method according to Claim 1,
**characterized in that**, when a registered user changes from a state in which he is within radio range of a boundary associated with a terminal (10, 11) identified in his profile, and/or in which the terminal is able to receive calls on a network, to a state in which he is no longer within radio range of a boundary associated with a terminal identified in his profile, or in which the terminal is no longer able to receive calls on a network, and vice versa, a procedure for declaring accessibility of the terminal is triggered in order to update the state of accessibility of the terminal.

6. Method according to Claim 1,
**characterized in that** each user profile comprises at least one directory each entry of which associates an identifier of a correspondent with a telephone number of the correspondent.

7. Services coordination server (1) for implementing a service for automatically calling back a registered user, sought by a calling user in a telecommunications system comprising at least one telecommunications or digital data transmission network (6), each user being equipped with at least one telecommunications terminal (10, 11) able to be connected to one of the networks, comprising:
- means allowing the users of the automatic callback service to register and to submit a user profile comprising filter and schedule data defining availability time slots each associated with at least one list of correspondents that are or are not authorized to call the user during the time slot,
- updating means for keeping up to date a state of accessibility of each registered user according to whether at least one terminal (10, 11) of the user is or is not accessible via a network (6) or is or is not communicating,
- means for obtaining a state of availability to a calling user of a registered user called by said calling user, according to whether said calling user is or is not authorized to enter into communication with the registered user on the basis of the schedule and filter information contained in the profile of the registered user, and
- means for triggering a procedure for automatically calling back the registered user called by the calling user, when the called user is inaccessible or unavailable to the calling user, this automatic callback procedure putting the calling user into communication with the called user as soon as said called user becomes accessible and available to the calling user, on the basis of the states of accessibility and of availability of the called user.

8. System for automatically calling back a registered user, sought by a calling user in a telecommunications system comprising at least one telecommunications or digital data transmission network (6), each user being equipped with at least one telecommunications terminal (10, 11) able to be connected to one of the networks, comprising:
- a services coordination server (1) according to Claim 7,
- a reachability server comprising means for keeping up to date a state of availability of a registered user in the services coordination server (1) to a calling user according to whether said calling user is or is not authorized to enter into communication with the registered user on the basis of the schedule and filter information contained in the profile of the registered user, and
- a call server (2) to which all of the calls intended for a registered user are transmitted,
the state of availability of the called user being provided to the services coordination server (1) by the reachability server (3).

9. System according to Claim 8,
**characterized in that** each terminal (10, 11) of a registered user is a terminal comprising means for connecting to said at least one telecommunications or digital data transmission network (6), said terminal also comprising means for, each time a user changes from a state in which said user is able to receive calls via the terminal to a state in which said user is no longer able to receive calls via the terminal, and vice versa, sending an accessibility message to the updating means of the services coordination server (1).

10. System according to Claim 8,
**characterized in that**, if the terminal (10) of the registered user is a landline telephone, it comprises means (12, 13) for detecting the presence or the absence of the user in a radio range area having a boundary associated with the landline telephone, and means (13) for transmitting, to the means of the services coordination server (1) for updating the state of accessibility of the user, a landline telephone accessibility message upon each change of state of presence of the user in said area.

11. System according to Claim 8,
**characterized in that**, if the terminal (11) of the user is a mobile telephone, it comprises a program that is loaded in a memory accessible to the mobile telephone and that is executed when the mobile telephone is powered up if said mobile telephone is in an area covered by a corresponding cellular telephony network (6), or when the mobile telephone is powered off, so as to trigger sending, to the means of the services coordination server (1) for updating the state of accessibility of the user, of a mobile telephone accessibility message so as to declare said mobile telephone accessible or inaccessible, respectively.

12. System according to Claim 8,
**characterized in that**, if the terminal (11) of the user is a terminal equipped with data processing means and connected to a terrestrial network (6), it comprises a program that is loaded in the memory of the terminal and that is executed when the terminal is powered up, or when the terminal is powered off, so as to trigger sending, to the means of the services coordination server (1) for updating the state of accessibility of the user, of a terminal accessibility message so as to declare said terminal accessible or inaccessible, respectively.

13. Computer program intended to be executed by a server connected to at least one telecommunications or digital data transmission network (6), for implementing a service for automatically calling back a called user, sought by a calling user, each user being equipped with at least one telecommunications terminal (10, 11) able to be connected to one of the networks,
**characterized in that** it is designed to implement the method according to one of Claims 1 to 6.
